# EUROPEAN PATENT SPECIFICATION

(11) **EP 3 816 916 B1**
(45) Date of publication and mention of the grant of the patent: **22.04.2026**
(21) Application number: 19883856.7
(22) Date of filing: 19.09.2019
(51) Int. Cl.: G06Q 30/00, G06Q 30/06, G06F 16/27, G06F 16/23, G06Q 20/02

(54) **METHOD AND DEVICE FOR STORING MERCHANT AUTHENTICATION DATA INTO BLOCKCHAIN, AND METHOD AND DEVICE FOR OBTAINING MERCHANT AUTHENTICATION DATA FROM BLOCKCHAIN**
VERFAHREN UND VORRICHTUNG ZUR SPEICHERUNG VON HÄNDLERAUTHENTIFIZIERUNGSDATEN IN EINE BLOCKCHAIN UND VERFAHREN UND VORRICHTUNG ZUM ERHALTEN VON HÄNDLERAUTHENTIFIZIERUNGSDATEN AUS EINER BLOCKCHAIN
PROCÉDÉ ET DISPOSITIF POUR STOCKER DES DONNÉES D'AUTHENTIFICATION DE COMMERÇANT DANS UNE CHAÎNE DE BLOCS, ET PROCÉDÉ ET DISPOSITIF POUR OBTENIR DES DONNÉES D'AUTHENTIFICATION DE COMMERÇANT À PARTIR D'UNE CHAÎNE DE BLOCS

(30) Priority: 14.11.2018 CN 201811353554
(43) Date of publication of application: 05.05.2021
(73) Proprietor: Advanced New Technologies Co., Ltd., George Town, Grand Cayman KY1-9008 (KY)
(72) Inventor: CHE, Huizi, Hangzhou, Zhejiang 311121 (CN)
(74) Representative: Goddar, Heinz J.
(86) International application number: PCT/CN2019/106585
(87) International publication number: WO 2020/098373

(56) References cited:
- AU-A4- 2018 100 482
- CN-A- 107 231 351
- CN-A- 107 977 910
- CN-A- 108 009 646
- CN-A- 108 667 632
- CN-A- 109 583 912
- US-A1- 2018 198 794
- US-A1- 2018 322 491
- SHU YUN LIM ET AL: "Blockchain Technology the Identity Management and Authentication Service Disruptor: A Survey", INTERNATIONAL JOURNAL ON ADVANCED SCIENCE, ENGINEERING AND INFORMATION TECHNOLOGY, 30 September 2018 (2018-09-30), pages 1735, XP055736288, Retrieved from the Internet <URL:https://core.ac.uk/download/pdf/296921303.pdf> [retrieved on 20201002], DOI: 10.18517/ijaseit.8.4-2.6838
- ZHU XIAOYANG ET AL: "A Survey on Blockchain-Based Identity Management Systems for the Internet of Things", 2018 IEEE INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 30 July 2018 (2018-07-30), pages 1568 - 1573, XP033556353, DOI: 10.1109/CYBERMATICS_2018.2018.00263

## Description

### TECHNICAL FIELD

Embodiments of this specification relate to the field of blockchain technologies, and more specifically, to a method and an apparatus for storing and obtaining merchant authentication data in a blockchain of a blockchain network.

### BACKGROUND

Consumers often query credit and authentication data of category B merchants through the Internet platform. The conventional merchant authentication process is a serial interface invoking process. For example, if a platform serving as a user of authentication data wants to obtain merchant authentication data, the platform must invoke an authenticator's interface. After receiving a request, the authenticator initiates a request to a data broker. Then, the data broker invokes an interface of the administration for industry and commerce. As such, a result can be returned only when all nodes on the entire data link work normally. Moreover, each node on the link stores data locally. In addition, to ensure the authenticity of the data, the data of all nodes must be completely consistent to ensure that the data exposed by each node is correct. To ensure that the data of all nodes is consistent, if the data of some nodes is changed, these nodes need to actively notify other nodes of the change through an interface, or the other nodes need to actively obtain the data of other nodes for comparison.

Therefore, a more effective solution for merchant authentication is needed.

AU 2018100482 A4 discloses a personal/client identification and verification process, pseudonymous system and blockchain based transaction network for monitoring and restricting transactions of cryptography-based electronic money (CBEM) involving clients. In one embodiment, there is a legal identity-linked credential authentication protocol for providing a practical solution for issues related to cryptocurrency theft, KYC and AML (Anti-Money Laundering), while maintaining user privacy. The transaction network essentially comprises relay nodes formed by the client wallets of the client devices, and is essentially used to perform CBEM transfers between clients. Additionally, there are mechanisms including a processor of a central approval server and/or a smart contract which monitors transactions for suspicious activity.

### SUMMARY

The invention is defined by the independent claims. Preferred embodiments are recited by the dependent claims. Below, embodiments of this specification aim to provide a more effective solution for storing and obtaining merchant authentication data in a blockchain of a blockchain network, so as to solve, among others, the deficiencies of existing technologies.

To achieve the above objective, one aspect of this disclosure provides a method for storing merchant authentication data in a blockchain of a blockchain network; the blockchain network includes a plurality of verification nodes and a plurality of usage nodes; the plurality of verification nodes correspond to various organizations issuing various types of authentication data, respectively; the method is performed on a first verification node of the plurality of verification nodes, including: obtaining authentication data of a merchant, the authentication data being issued by an organization corresponding to the first verification node; and broadcasting the authentication data to other verification nodes of the plurality of verification nodes in the blockchain network, so that the authentication data is verified based on a consensus mechanism and stored in the blockchain network in response to that verification of the authentication data succeeds.

In some embodiments, the authentication data includes one or more of image data or text data.

In some embodiments, the authentication data is stored in the blockchain network in association with a merchant identifier of the merchant in response to that verification of the authentication data succeeds.

In some embodiments, the authentication data is stored in the blockchain network in association with a node identifier of the first verification node in response to that verification of the authentication data succeeds.

In some embodiments, the verification is performed by using a smart contract deployed in the blockchain network, and the smart contract is jointly signed by the plurality of verification nodes.

In some embodiments, the verification includes verifying image data with respect to one or more of: a size of the image data, a resolution of the image data, content legality of the image data, content validity of the image data, or whether the image data has been modified.

In some embodiments, the verification includes verifying text data with respect to one or more of: a format or content validity of the text data.

In some embodiments, the broadcasting the authentication data to other verification nodes of the plurality of verification nodes in the blockchain network includes: broadcasting the authentication data and a digital signature of the first verification node to other verification nodes of the plurality of verification nodes in the blockchain network, where the verification includes verifying the digital signature.

Another aspect of this specification provides a method for obtaining merchant authentication data from a blockchain of a blockchain network; the blockchain network includes a plurality of verification nodes and a plurality of usage nodes; the plurality of verification nodes correspond to various organizations issuing various types of authentication data, respectively; the method is performed on a first usage node of the plurality of usage nodes, including: obtaining all the blocks in the blockchain network, which store respective authentication data of a plurality of merchants, and the plurality of merchants include a first merchant; and retrieving at least one piece of authentication data of the first merchant from the blocks.

In some embodiments, the retrieving the at least one piece of authentication data of the first merchant from the blocks includes: establishing an index of the plurality of merchants for the blocks, and retrieving the at least one piece of authentication data of the first merchant based on the index.

In some embodiments, the retrieving the at least one piece of authentication data of the first merchant from the blocks includes: establishing a database of the authentication data for the blocks, and retrieving the at least one piece of authentication data of the first merchant based on the database, where the database includes an association relationship between the plurality of merchants and the authentication data.

In some embodiments, the database further includes an association relationship between the authentication data and a node identifier of a verification node corresponding to an organization issuing the authentication data, where the retrieving the at least one piece of authentication data of the first merchant from the blocks includes: retrieving, from the blocks, the at least one piece of authentication data of the first merchant and a node identifier of a verification node corresponding to an organization issuing each of the at least one piece of authentication data; and screening the at least one piece of authentication data based on the node identifier of the verification node corresponding to the organization issuing each of the at least one piece of authentication data.

In some embodiments, the database further includes an association relationship between the authentication data and a timestamp of a block at which the authentication data is located, where the retrieving the at least one piece of authentication data of the first merchant from the blocks includes: retrieving, from the blocks, the at least one piece of authentication data of the first merchant and a timestamp corresponding to each of the at least one piece of authentication data; and screening the at least one piece of authentication data based on the timestamp corresponding to each of the at least one piece of authentication data.

Another aspect of this specification provides an apparatus for storing merchant authentication data in a blockchain of a blockchain network; the blockchain network includes a plurality of verification nodes and a plurality of usage nodes; the plurality of verification nodes correspond to various organizations issuing various types of authentication data, respectively; the apparatus is implemented on a first verification node of the plurality of verification nodes, including: an acquisition unit, configured to obtain authentication data of a merchant, the authentication data being issued by an organization corresponding to the first verification node; and a broadcast unit, configured to broadcast the authentication data to other verification nodes of the plurality of verification nodes in the blockchain network, so that the authentication data is verified based on a consensus mechanism and stored in the blockchain network in response to the verification of the authentication data succeeding.

In some embodiments, the broadcast unit is further configured to broadcast the authentication data and a digital signature of the first verification node to other verification nodes of the plurality of verification nodes in the blockchain network, where the verification includes verifying the digital signature.

Another aspect of this specification provides an apparatus for obtaining merchant authentication data from a blockchain of a blockchain network; the blockchain network includes a plurality of verification nodes and a plurality of usage nodes; the plurality of verification nodes correspond to various organizations issuing various types of authentication data, respectively; the apparatus is implemented on a first usage node of the plurality of usage nodes, including: an acquisition unit, configured to obtain all the blocks in the blockchain network, which store respective authentication data of a plurality of merchants, and the plurality of merchants include a first merchant; and a retrieving unit, configured to retrieve at least one piece of authentication data of the first merchant from the blocks.

In some embodiments, the retrieving unit includes: an index establishment subunit, configured to establish an index of the plurality of merchants for the blocks; and a first retrieving subunit, configured to retrieve the at least one piece of authentication data of the first merchant based on the index.

In some embodiments, the retrieving unit includes: a database establishment subunit, configured to establish a database of the authentication data for the blocks, where the database includes an association relationship between the plurality of merchants and the authentication data; and a second retrieving subunit, configured to retrieve the at least one piece of authentication data of the first merchant based on the database.

In some embodiments, the database further includes an association relationship between the authentication data and a node identifier of a verification node corresponding to an organization issuing the authentication data, where the retrieving unit further includes a third retrieving subunit, configured to retrieve, from the blocks, the at least one piece of authentication data of the first merchant and a node identifier of a verification node corresponding to an organization issuing each of the at least one piece of authentication data; and a first screening subunit, configured to screen the at least one piece of authentication data based on the node identifier of the verification node corresponding to the organization issuing each of the at least one piece of authentication data.

In some embodiments, the database further includes an association relationship between the authentication data and a timestamp of a block at which the authentication data is located, where the retrieving unit further includes a fourth retrieving subunit, configured to retrieve, from the blocks, the at least one piece of authentication data of the first merchant and a timestamp corresponding to each of the at least one piece of authentication data; and a second screening subunit, configured to screen the at least one piece of authentication data based on the timestamp corresponding to each of the at least one piece of authentication data.

Another aspect of this specification provides a computing device, including a memory and a processor, where the memory stores executable code, and the processor executes the executable code to implement any one of the above methods.

According to the merchant authentication solution in the embodiments of this specification, a blockchain-based peer-to-peer (p2p) network can be used to ensure that all nodes achieve data consistency in time, thereby solving the problem of data inconsistency caused by the conventional authentication process; the blockchain network records all authentication data changes, so that any authentication data change can be traced, thereby solving the problem that data cannot be traced in the conventional authentication process; in addition, a network structure and an operating mechanism of the blockchain network can ensure that the data of all nodes is synchronized at the second level, thereby solving the problem that the conventional authentication process is complicated and the data link is excessively long.

### BRIEF DESCRIPTION OF DRAWINGS

To make embodiments of this specification clearer, the embodiments of this specification are described with reference to accompanying drawings.
FIG. 1 shows a blockchain-based authentication system 100 according to some embodiments of this specification;
FIG. 2 shows a method for storing merchant authentication data in a blockchain of a blockchain network according to some embodiments of this specification;
FIG. 3 shows a method for obtaining merchant authentication data from a blockchain of a blockchain network according to some embodiments of this specification;
FIG. 4 shows an apparatus 400 for storing merchant authentication data in a blockchain of a blockchain network according to some embodiments of this specification; and
FIG. 5 shows an apparatus 500 for obtaining merchant authentication data from a blockchain of a blockchain network according to some embodiments of this specification.

### DESCRIPTION OF EMBODIMENTS

The following describes the embodiments of this specification with reference to accompanying drawings.

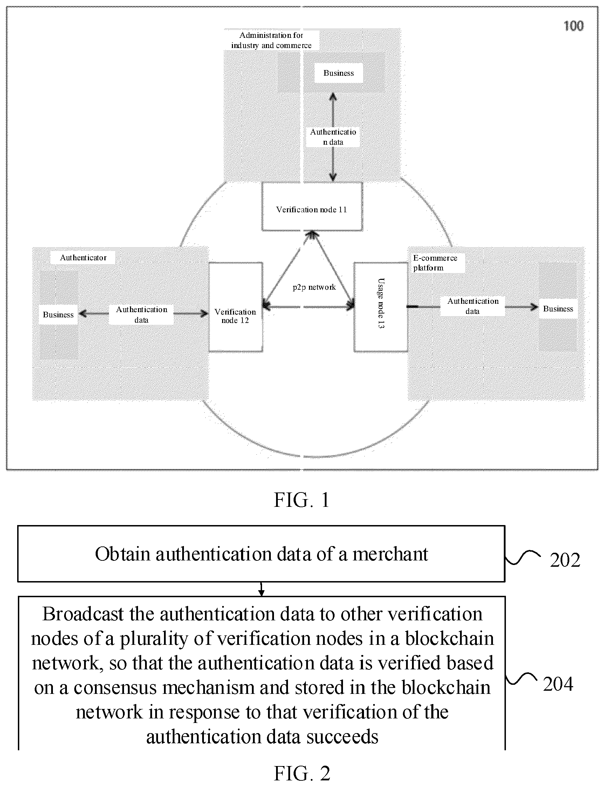

FIG. 1 shows a blockchain-based authentication system 100 according to some embodiments of this specification. As shown in FIG. 1, the system 100 is a blockchain system, which includes a verification node 11, a verification node 12, and a usage node 13. It can be understood that although only three nodes are shown in the figure, these nodes are only illustrative, and the system 100 may include any number of verification nodes and usage nodes. The verification node 11 or 12 corresponds to an organization issuing merchant authentication data. For example, as shown in FIG. 1, the verification node 11 may correspond to an authority such as the administration for industry and commerce, and the verification node 12 may correspond to an authenticator. The authenticator may be a certification organization such as SGS, TUV Rheinland Group (TUV), etc. In the system 100, for example, after applying for a business license for a merchant through the relevant business of the administration for industry and commerce, the verification node 11 obtains authentication data corresponding to the business license (such as image data of the business license), and broadcasts the obtained authentication data to the blockchain network. A plurality of verification nodes in the system determine a mining node based on the consensus mechanism, and the mining node stores the authentication data in the blockchain network. For example, the mining node may be the verification node 12. After storing the authentication data in the blockchain network, the verification node 12 broadcasts to all nodes in the system 100, so that each node updates the local copy of the blockclain to ensure that the data of all the nodes is consistent. At the same time, the authenticator corresponding to the verification node 12 can also obtain the authentication data of the merchant through its own business operation, and similarly store the authentication data in the blockchain network through the verification node 12. The usage node 13 is a node that uses the authentication data stored in the blockchain network, and corresponds to an Internet e-commerce platform, for example. The platform includes a plurality of merchants and provides services for consumers. When a consumer of the platform queries authentication data of a merchant through the platform, the platform obtains all the blocks in the blockchain network through the usage node 13 and obtains the authentication data of the corresponding merchant from the blocks, so as to display the data to the consumer.

FIG. 2 shows a method for storing merchant authentication data in a blockchain of a blockchain network according to some embodiments of this specification. The blockchain network includes a plurality of verification nodes and a plurality of usage nodes. The plurality of verification nodes correspond to various organizations issuing various types of authentication data, respectively. The method is performed on a first verification node of the plurality of verification nodes, including the following steps:
Step S202: Obtain authentication data of a merchant, the authentication data being issued by an organization corresponding to the first verification node.
Step S204: Broadcast the authentication data to other verification nodes of the plurality of verification nodes in the blockchain network, so that the authentication data is verified based on a consensus mechanism and stored in the blockchain network in response to that verification of the authentication data succeeds.

In the embodiments of this specification, the blockchain is, for example, a consortium blockchain, which includes a plurality of verification nodes and a plurality of usage nodes. The verification node corresponds to an organization issuing authentication data. The organization is, for example, the administration for industry and commerce, which issues a business license for a merchant. The organization is alternatively a third-party certification organization, such as SGS or TUV, which issues various types of authentication data of the merchant, such as company certification data, product certification data, product testing information, etc. The usage node can obtain the authentication data of the merchant through the blockchain network, and the usage node does not participate in the verification and storage processes of the authentication data in the blockchain network.

First, in step S202, the authentication data of the merchant is obtained, the authentication data being issued by an organization corresponding to the first verification node.

The method is performed on the first verification node, which corresponds to the administration for industry and commerce, for example. For example, a merchant can submit the required materials to the administration for industry and commerce and carry out the specified procedure, so that the administration for industry and commerce approves a business license for the merchant. After approving the business license, the administration for industry and commerce can obtain an image of the business license, so that the first verification node obtains the authentication data of the merchant corresponding to the business license. The first verification node may also be, for example, a third-party certification organization (such as SGS), which conducts door-to-door surveys on the merchant, tests the merchant's products, and so on, to obtain text data for authenticating the merchant. The text data includes, for example, a plurality of characteristics of the merchant, such as the merchant's business operation period and operation scale, etc. As such, the first verification node obtains the authentication data of the merchant corresponding to the text data. It can be understood that the authentication data may alternatively include both the image data and the text data. For example, the merchant authentication provided by a third-party certification organization may include a text description of the merchant and image data such as a business license.

In step S204, the authentication data is broadcast to other verification nodes in the blockchain network, so that the authentication data is verified based on a consensus mechanism and stored in the blockchain network in response to that verification of the authentication data succeeds.

After obtaining the authentication data of the merchant, the first verification node can use a private key to digitally sign the authentication data to make it clear that the issuer of the authentication data is the organization corresponding to the digital signature. Then, the first verification node broadcasts the authentication data and the digital signature to the plurality of verification nodes in the blockchain network, so that each verification node obtains the authentication data and the digital signature. For example, the first verification node can send the authentication data and the digital signature to a second verification node, and the second verification node verifies the digital signature of the first verification node by using a public key of the first verification node. In response to that verification of the authentication data succeeds, the second verification node sends the authentication data and the digital signature to a third verification node. The third verification node operates similarly to the second verification node. As such, the file is transmitted to each verification node in the blockchain network, and it is ensured that the initial authentication data has not been tampered with.

After obtaining the authentication data and the digital signature, the plurality of verification nodes determine a mining node based on a consensus mechanism. The consensus mechanism may be any consensus mechanism that can be obtained by a person skilled in the art. For example, the consensus mechanism includes, but is not limited to: proof of work (POW), proof of stake (POS), delegated proof of stake (DPOS), practical byzantine fault tolerance (PBFT), delegated byzantine fault tolerance (DBFT), etc. In some embodiments, PBFT and DPOS are used as consensus mechanisms in the consortium blockchain. It can be understood that the mining node determined based on a specific consensus mechanism may be another verification node other than the first verification node, or may be the first verification node itself.

In some embodiments, after obtaining the authentication data, each verification node puts the authentication data into the local to-be-accounted information pool. After consensus is reached, the mining node assembles a plurality of pieces of authentication data in the local to-be-accounted information pool and stores them in a block.

After the mining node is determined, the mining node verifies the locally received authentication data and digital signature. First, the mining node verifies whether the digital signature is the digital signature of the first verification node. Specifically, the mining node can decrypt the digital signature by using the public key of the first verification node that is obtained in advance or sent simultaneously with the authentication data from the first verification node, and compare the digital signature with the digest of the authentication data to determine whether the digital signature comes from the first verification node and whether the authentication data is tampered with.

As described above, the authentication data may be image data. In such case, in addition to verifying the digital signature, it can further be verified whether the form and content of the image meet the requirements. For example, it can be verified whether the size and resolution of the image meet the requirements, whether the content of the image is legal, whether the content shown in the image is correct, whether the image has been modified, and so on. The authentication data may alternatively be text data. In such case, it is verified whether the format and content of the text are valid. For example, if the text is the merchant's business operation period, whether the operation period is valid can be determined based on the existing authentication data of the merchant stored locally. Since each verification node is a node in the blockchain network, it has complete data in the blockchain network. Thus, each verification node can obtain the existing authentication data of the merchant from all the locally accessed ledgers of the blockchain, and determine on the content validity of the newly obtained authentication data based on the existing authentication data.

In some embodiments, a smart contract for verifying the authentication data is deployed in the blockchain network, and the smart contract is jointly signed by the plurality of verification nodes. The smart contract may include a plurality of clauses, and each clause corresponds to one specific verification action. For example, before verifying the authentication data, the mining node can invoke the smart contract locally to trigger the execution of the smart contract. After the smart contract starts to be executed, it receives the authentication data and digital signature, and verifies them based on the various clauses in the smart contract.

For example, when verifying the digital signature, the smart contract can obtain the pre-stored public key of the first verification node from the storage unit, and perform a calculation based on the algorithm of the digital signature to verify the digital signature.

For example, in response to determining that the authentication data is image data, the smart contract triggers its clauses related to the image data, such as determining the size of the image and determining whether the size of the image meets the requirements, determining the resolution of the image and determining whether the resolution of the image meets the requirements, and invoking the image detection model to detect the content of the image and determine whether the content meets the requirements, and so on. In addition, after obtaining the above determination result, the smart contract can automatically take a corresponding action based on the determination result. For example, in response to determining that the resolution of the image is insufficient, the smart contract automatically cancels the accounting and storage of the authentication data, and notifies the first verification node that after determining that the image meets the requirements, the first verification node can automatically perform accounting and storage of the authentication data, and so on.

For example, in response to determining that the authentication data is text data, the smart contract triggers its clauses related to the text data. For example, the smart contract may include a clause for verifying the text format. The clause compares the format of the text data with a predetermined number of formats to determine whether the format of the text data meets a specified format. In response to the text data being submitted in a specified format, the smart contract can perform content verification based on a predetermined format. For example, the text is searched through a preset keyword library to determine which clause is triggered for the text. Each clause in the smart contract is used to design a specific verification algorithm for the specific content in the authentication data. For example, the smart contract may include a clause for verifying the merchant's business operation period. After determining that the text includes the keyword of the merchant's business operation period, the smart contract can obtain the number at the predetermined position in the text (i.e., the business operation period in the text), and compare the number with the existing information about the merchant's business operation period, to verify the content validity of the text. For example, the validity of the business operation period is determined by determining whether the number is the merchant's business operation period submitted last year plus one.

After completing the verifying of the authentication data, in response to that verification of the authentication data succeeds, the mining node generates a new block in the blockchain network based on the authentication data, that is, stores the authentication data as a block in the blockchain network. As described above, the mining node may assemble a plurality of pieces of authentication data to generate a block. After generating the new block, the mining node broadcasts the generation of the new block to the entire blockchain network, so that each node updates the local copy of the blockclain network.

During storage of the authentication data in the blockchain network, to facilitate information query, the authentication data can be stored in association with the merchant identifier. For example, the authentication data and the corresponding merchant can be stored in the form of a database. In some embodiments, the authentication data can alternatively be stored in association with the node identifier of the first verification node. For example, a column for the issuing organization identifier can be added to the database, so that the issuing organization corresponding to the authentication data can be quickly obtained. In some embodiments, the authentication data can alternatively be stored in association with the timestamp of the block at which the authentication data is located.

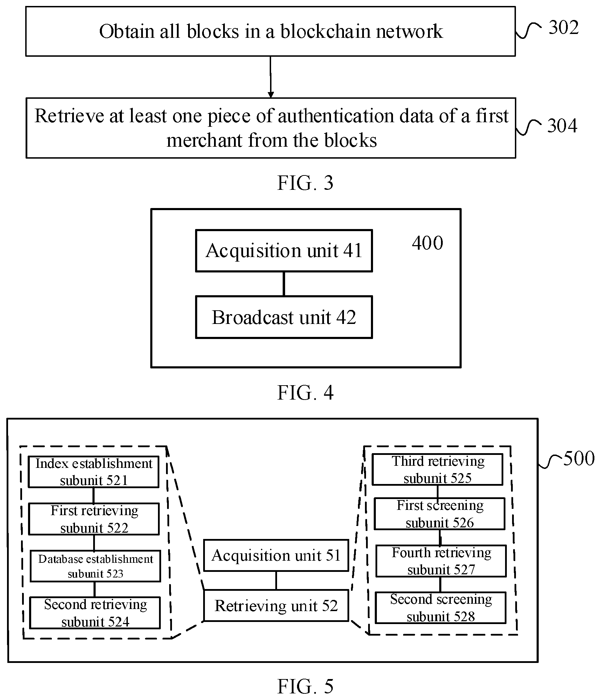

FIG. 3 shows a method for obtaining merchant authentication data from a blockchain of a blockchain network according to some embodiments of this specification. The blockchain network includes a plurality of verification nodes and a plurality of usage nodes. The plurality of verification nodes correspond to various organizations issuing various types of authentication data, respectively. The method is performed on a first usage node of the plurality of usage nodes, including the following steps:
Step S302: Obtain all the blocks in the blockchain network, which store respective authentication data of a plurality of merchants, the plurality of merchants including a first merchant.
Step S304: Retrieve at least one piece of authentication data of the first merchant from the obtained blocks.

First, in step S302, all the blocks in the blockchain network are obtained, where the blocks store respective authentication data of a plurality of merchants, and the plurality of merchants include a first merchant. For the specific description of the blockchain network, references can be made to the above description, and details are omitted herein for simplicity. The first usage node may be any one of the plurality of usage nodes. As a node in the blockchain network, the usage node can access the complete data in the blockchain network and continuously update the locally stored blocks (data blocks), so that the locally stored blocks are kept consistent with the blocks in the blockchain network. As described above, the plurality of blocks store the authentication data of the merchant and the information associated with the authentication data, such as the related merchant, issuing organization, timestamp, etc. The blocks in the blockchain network continuously grow over time, and at the same time, the local copies of the blockchain stored at each node in the blockchain network are updated accordingly.

In step S304, at least one piece of authentication data of the first merchant is retrieved from the blocks.

In some embodiments, the first usage node locally performs a search in the plurality of blocks with the identifier of the first merchant as a keyword, to obtain at least one piece of authentication data of the first merchant. For example, the authentication data is text information, and the text information includes the identifier of the first merchant. Thus, the authentication data can be searched out through the identifier of the first merchant. For example, when the first merchant is stored in association with its authentication data, at least one piece of authentication data associated with the first merchant can be searched out by performing search with the identifier of the first merchant as a keyword.

In some embodiments, the first usage node can locally establish an index of each merchant for the blocks. For example, the index can sort merchants based on a certain order. For example, when the merchant identifier is the Chinese phonetic alphabet, the merchants can be sorted based on an alphabetical order, so that the first merchant can be easily found in the index and at least one piece of authentication data corresponding to the first merchant can be retrieved from the index.

In some embodiments, the first usage node can locally establish a database about the authentication data for the blocks. The database includes, for example, the association relationship between the plurality of merchants and the authentication data, the association relationship between the issuing organization and the authentication data, the association relationship between the authentication data and the timestamp of the block at which the authentication data is located, and so on. Thus, at least one piece of authentication data of the first merchant can be retrieved based on the database. After the at least one piece of authentication data is obtained, the timestamp and issuing organization corresponding to each of the at least one piece of authentication data can further be obtained based on the database, so that the at least one piece of authentication data can be screened based on one or more of the timestamp or the issuing organization. For example, three pieces of authentication data with most recent timestamps can be selected for output, or the authentication data issued by a designated organization (such as the administration for industry and commerce) can be selected for output.

FIG. 4 shows an apparatus 400 for storing merchant authentication data in a blockchain of a blockchain network according to some embodiments of this specification. The blockchain network includes a plurality of verification nodes and a plurality of usage nodes. The plurality of verification nodes correspond to various organizations issuing various types of authentication data, respectively. The apparatus is implemented on a first verification node of the plurality of verification nodes, including: an acquisition unit 41, configured to obtain authentication data of a merchant, the authentication data being issued by an organization corresponding to the first verification node; and a broadcast unit 42, configured to broadcast the authentication data to other verification nodes of the plurality of verification nodes in the blockchain network, so that the authentication data is verified based on a consensus mechanism and stored in the blockchain network in response to that verification of the authentication data succeeds.

In some embodiments, the broadcast unit 42 is further configured to broadcast the authentication data and a digital signature of the first verification node to other verification nodes of the plurality of verification nodes in the blockchain network, where the verification includes verifying the digital signature.

FIG. 5 shows an apparatus 500 for obtaining merchant authentication data from a blockchain of a blockchain network according to some embodiments of this specification. The blockchain network includes a plurality of verification nodes and a plurality of usage nodes. The plurality of verification nodes correspond to various organizations issuing various types of authentication data, respectively. The apparatus is implemented on a first usage node of the plurality of usage nodes, including: an acquisition unit 51, configured to obtain all the blocks in the blockchain network, which store respective authentication data of a plurality of merchants, and the plurality of merchants include a first merchant; and a retrieving unit 52, configured to retrieve at least one piece of authentication data of the first merchant from the blocks.

In some embodiments, the retrieving unit 52 includes: an index establishment subunit 521, configured to establish an index of the plurality of merchants for the blocks; and a first retrieving subunit 522, configured to retrieve the at least one piece of authentication data of the first merchant based on the index.

In some embodiments, the retrieving unit 52 includes: a database establishment subunit 523, configured to establish a database of the authentication data for the blocks, where the database includes an association relationship between the plurality of merchants and the authentication data; and a second retrieving subunit 524, configured to retrieve the at least one piece of authentication data of the first merchant based on the database.

In some embodiments, the database further includes an association relationship between the authentication data and a node identifier of a verification node corresponding to an organization issuing the authentication data, where the retrieving unit 52 further includes a third retrieving subunit 525, configured to retrieve, from the blocks, the at least one piece of authentication data of the first merchant and a node identifier of a verification node corresponding to an organization issuing each of the at least one piece of authentication data; and a first screening subunit 526, configured to screen the at least one piece of authentication data based on the node identifier of the verification node corresponding to the organization issuing each of the at least one piece of authentication data.

In some embodiments, the database further includes an association relationship between the authentication data and a timestamp of a block at which the authentication data is located, where the retrieving unit 52 further includes a fourth retrieving subunit 527, configured to retrieve, from the blocks, the at least one piece of authentication data of the first merchant and a timestamp corresponding to each of the at least one piece of authentication data; and a second screening subunit 528, configured to screen the at least one piece of authentication data based on the timestamp corresponding to each of the at least one piece of authentication data.

Another aspect of this specification provides a computing device, including a memory and a processor, where the memory stores executable code, and the processor executes the executable code to implement any one of the above methods.

According to the merchant authentication solution in the embodiments of this specification, a blockchain-based peer-to-peer (p2p) network can be used to ensure that all nodes achieve data consistency in time, thereby solving the problem of data inconsistency caused by the conventional authentication process; the blockchain network records all authentication data changes, so that any authentication data change can be traced, thereby solving the problem that data cannot be traced in the conventional authentication process; in addition, a network structure and an operating mechanism of the blockchain network can ensure that the data of all nodes is synchronized at the second level, thereby solving the problem that the conventional authentication process is complicated and the data link is excessively long.

The embodiments in this specification are described in a progressive way. For the same or similar parts of the embodiments, references can be made to the embodiments mutually. Each embodiment focuses on a difference from other embodiments. Particularly, some system embodiments are basically similar to some method embodiments, and therefore are described briefly. For related parts, references can be made to related descriptions in the method embodiments.

The specific embodiments of this specification are described previously. Other embodiments fall within the scope of the appended claims. In some situations, the actions or steps described in the claims can be performed in an order different from the order in the embodiments and the desired results can still be achieved. In addition, the process depicted in the accompanying drawings does not necessarily need a particular execution order to achieve the desired results. In some implementations, multi-tasking and concurrent processing are feasible or may be advantageous.

A person of ordinary skill in the art can be further aware that, with reference to the examples described in the embodiments disclosed in this specification, units and algorithm steps can be implemented by electronic hardware, computer software, or a combination thereof. To clearly describe interchangeability between the hardware and the software, compositions and steps of each example are generally described above based on functions. Whether the functions are performed by hardware or software depends on particular applications and design constraints of the technical solutions. A person of ordinary skill in the art can use different methods to implement the described functions for each particular application, but it should not be considered that the implementation goes beyond the scope of this application.

The steps in the method or algorithm described in the embodiments disclosed in this specification may be implemented by hardware, a software module executed by the processor, or a combination of hardware and software. The software module can reside in a random access memory (RAM), a memory, a read-only memory (ROM), an electrically programmable ROM, an electrically erasable programmable ROM, a register, a hard disk, a removable magnetic disk, a CD-ROM, or any other form of storage medium known in the art.

In the specific embodiments described above, the objective, technical solutions, and beneficial effects of the present invention are further described in detail. It should be understood that the above descriptions are merely specific embodiments of the present invention, but are not intended to limit the protection scope of the present invention.

## Claims

1. A method for storing merchant authentication data in a blockchain of a blockchain network, the blockchain network including a plurality of verification nodes (11, 12) and a plurality of usage nodes, the plurality of verification nodes (11, 12) corresponding to various organizations configured to issue various types of authentication data, respectively, for a merchant and the nodes of the plurality of usage nodes being nodes configured to use authentication data stored in the blockchain network, the method including:
obtaining (202), by a first verification node of the plurality of verification nodes (11, 12), authentication data of the merchant, the authentication data being issued for the merchant by an organization corresponding to the first verification node; and
broadcasting (204), by the first verification node, the authentication data and a digital signature of the first verification node to other verification nodes (11, 12) of the plurality of verification nodes (11, 12) in the blockchain network, so that the authentication data is verified based on a consensus mechanism and stored in the blockchain network in response to that verification of the authentication data succeeds, wherein the verification comprises verifying the digital signature of the first verification node, wherein the verification is performed by using a smart contract deployed in the blockchain network, wherein the smart contract is jointly signed by the plurality of verification nodes (11, 12), and wherein the signed smart contract comprises a plurality of clauses to verify the digital signature and the authentication data, wherein each of the plurality of clauses corresponds to a specific verification action.

2. The method according to claim 1, wherein the authentication data includes one or more of image data or text data.

3. The method according to claim 1, wherein the authentication data is stored in the blockchain network in association with a merchant identifier of the merchant in response to that verification of the authentication data succeeds.

4. The method according to claim 1, wherein the authentication data is stored in the blockchain network in association with a node identifier of the first verification node in response to that the verification of the authentication data succeeds.

5. The method according to claim 1, wherein the verification includes verifying image data with respect to one or more of: a size of the image data, a resolution of the image data, content legality of the image data, content validity of the image data, or whether the image data has been modified.

6. The method according to claim 1, wherein the verification includes verifying text data with respect to one or more of: a format or content validity of the text data.

7. The method according to any of the preceding claims, further including:
obtaining (302), by a first usage node of the plurality of usage nodes, all blocks in the blockchain network, the blocks storing respective authentication data of a plurality of merchants, wherein the plurality of merchants including a first merchant; and
retrieving (304), by the first usage node, at least one piece of authentication data of the first merchant from the blocks.

8. The method according to claim 7, wherein the retrieving, by the first usage node, the at least one piece of authentication data of the first merchant from the blocks includes: establishing an index of the plurality of merchants for the blocks, and retrieving the at least one piece of authentication data of the first merchant based on the index.

9. The method according to claim 7, wherein the retrieving, by the first usage node, the at least one piece of authentication data of the first merchant from the blocks includes: establishing a database of the authentication data for the blocks, and retrieving the at least one piece of authentication data of the first merchant based on the database, the database including an association relationship between the plurality of merchants and the authentication data.

10. The method according to claim 9, wherein the database further includes an association relationship between the authentication data and a node identifier of a verification node (11, 12) corresponding to an organization issuing the authentication data, and the retrieving, by the first usage node, the at least one piece of authentication data of the first merchant from the blocks includes: retrieving, from the blocks, the at least one piece of authentication data of the first merchant and a node identifier of a verification node (11, 12) corresponding to an organization issuing each of the at least one piece of authentication data; and screening the at least one piece of authentication data based on the node identifier of the verification node (11, 12) corresponding to the organization issuing each of the at least one piece of authentication data.

11. The method according to claim 9, wherein the database further includes an association relationship between the authentication data and a timestamp of a block at which the authentication data is located, and the retrieving, by the first usage node, the at least one piece of authentication data of the first merchant from the blocks includes: retrieving, from the blocks, the at least one piece of authentication data of the first merchant and a timestamp corresponding to each of the at least one piece of authentication data; and screening the at least one piece of authentication data based on the timestamp corresponding to each of the at least one piece of authentication data.

12. A computing device, comprising a memory and a processor, the memory storing executable code, and the processor executing the executable code to implement the method according to any one of claims 1 to 11.

13. A computer-readable storage medium comprising instructions stored thereon which, when executed by a processor of a computing device, cause the computing device to implement the method according to any one of claims 1 to 11.

## Patentansprüche

1. Verfahren zum Speichern von Händlerauthentifizierungsdaten in einer Blockchain eines Blockchain-Netzwerks, wobei das Blockchain-Netzwerk eine Mehrzahl von Verifizierungsknoten (11, 12) und eine Mehrzahl von Nutzungsknoten aufweist, wobei die Mehrzahl von Verifizierungsknoten (11, 12) verschiedenen Organisationen entspricht, die eingerichtet sind, verschiedene Arten von Authentifizierungsdaten jeweils für einen Händler auszugeben, und die Knoten der Mehrzahl von Nutzungsknoten Knoten sind, die eingerichtet sind, Authentifizierungsdaten zu verwenden, die in dem Blockchain-Netzwerk gespeichert sind, wobei das Verfahren folgende Schritte aufweist:
Erhalten (202), durch einen ersten Verifizierungsknoten der Mehrzahl von Verifizierungsknoten (11, 12), von Authentifizierungsdaten des Händlers, wobei die Authentifizierungsdaten für den Händler von einer Organisation ausgegeben werden, die dem ersten Verifizierungsknoten entspricht; und
Rundsenden (204), durch den ersten Verifizierungsknoten, der Authentifizierungsdaten und einer digitalen Signatur des ersten Verifizierungsknotens an andere Verifizierungsknoten (11, 12) der Mehrzahl von Verifizierungsknoten (11, 12) in dem Blockchain-Netzwerk, sodass die Authentifizierungsdaten basierend auf einem Konsensmechanismus verifiziert und in dem Blockchain-Netzwerk als Reaktion darauf gespeichert werden, dass die Verifizierung der Authentifizierungsdaten erfolgreich ist, wobei die Verifizierung das Verifizieren der digitalen Signatur des ersten Verifizierungsknotens umfasst, wobei die Verifizierung unter Verwendung eines intelligenten Vertrags durchgeführt wird, der in dem Blockchain-Netzwerk eingesetzt wird, wobei der intelligente Vertrag gemeinsam von der Mehrzahl von Verifizierungsknoten (11, 12) unterzeichnet wird, und wobei der unterzeichnete intelligente Vertrag eine Mehrzahl von Klauseln zum Verifizieren der digitalen Signatur und der Authentifizierungsdaten umfasst, wobei jede der Mehrzahl von Klauseln einer spezifischen Verifizierungsaktion entspricht.

2. Verfahren nach Anspruch 1, wobei die Authentifizierungsdaten eines oder mehrere von Bilddaten oder Textdaten aufweisen.

3. Verfahren nach Anspruch 1, wobei die Authentifizierungsdaten in dem Blockchain-Netzwerk in Verbindung mit einer Händlerkennung des Händlers als Reaktion darauf gespeichert werden, dass die Verifizierung der Authentifizierungsdaten erfolgreich ist.

4. Verfahren nach Anspruch 1, wobei die Authentifizierungsdaten in dem Blockchain-Netzwerk in Verbindung mit einer Knotenkennung des ersten Verifizierungsknotens als Reaktion darauf gespeichert werden, dass die Verifizierung der Authentifizierungsdaten erfolgreich ist.

5. Verfahren nach Anspruch 1, wobei die Verifizierung ein Verifizieren von Bilddaten in Bezug auf eines oder mehrere von Folgendem aufweist: eine Größe der Bilddaten, eine Auflösung der Bilddaten, Inhaltsrechtmäßigkeit der Bilddaten, Inhaltsgültigkeit der Bilddaten oder ob die Bilddaten modifiziert wurden.

6. Verfahren nach Anspruch 1, wobei die Verifizierung ein Verifizieren von Textdaten in Bezug auf eines oder mehrere von Folgendem aufweist: ein Format oder eine Inhaltsgültigkeit der Textdaten.

7. Verfahren nach einem der vorhergehenden Ansprüche, ferner aufweisend:
Erhalten (302), durch einen ersten Nutzungsknoten der Mehrzahl von Nutzungsknoten, aller Blöcke in dem Blockchain-Netzwerk, wobei die Blöcke jeweilige Authentifizierungsdaten einer Mehrzahl von Händlern speichern, wobei die Mehrzahl von Händlern einen ersten Händler aufweist; und
Abrufen (304), durch den ersten Nutzungsknoten, mindestens eines Teils von Authentifizierungsdaten des ersten Händlers aus den Blöcken.

8. Verfahren nach Anspruch 7, wobei das Abrufen, durch den ersten Nutzungsknoten, des mindestens einen Teils von Authentifizierungsdaten des ersten Händlers aus den Blöcken Folgendes aufweist: Erstellen eines Index der Mehrzahl von Händlern für die Blöcke und Abrufen des mindestens einen Teils von Authentifizierungsdaten des ersten Händlers basierend auf dem Index.

9. Verfahren nach Anspruch 7, wobei das Abrufen, durch den ersten Nutzungsknoten, des mindestens einen Teils von Authentifizierungsdaten des ersten Händlers aus den Blöcken Folgendes aufweist: Erstellen einer Datenbank der Authentifizierungsdaten für die Blöcke und Abrufen des mindestens einen Teils von Authentifizierungsdaten des ersten Händlers basierend auf der Datenbank, wobei die Datenbank eine Verbindungsbeziehung zwischen der Mehrzahl von Händlern und den Authentifizierungsdaten aufweist.

10. Verfahren nach Anspruch 9, wobei die Datenbank ferner eine Verbindungsbeziehung zwischen den Authentifizierungsdaten und einer Knotenkennung eines Verifizierungsknotens (11, 12) aufweist, der einer Organisation entspricht, die die Authentifizierungsdaten ausgibt, und das Abrufen, durch den ersten Nutzungsknoten, des mindestens einen Teils von Authentifizierungsdaten des ersten Händlers aus den Blöcken Folgendes aufweist: Abrufen, aus den Blöcken, des mindestens einen Teils von Authentifizierungsdaten des ersten Händlers und einer Knotenkennung eines Verifizierungsknotens (11, 12), der einer Organisation entspricht, die jeden des mindestens einen Teils von Authentifizierungsdaten ausgibt; und Screenen des mindestens einen Teils von Authentifizierungsdaten basierend auf der Knotenkennung des Verifizierungsknotens (11, 12), der der Organisation entspricht, die jeden des mindestens einen Teils von Authentifizierungsdaten ausgibt.

11. Verfahren nach Anspruch 9, wobei die Datenbank ferner eine Verbindungsbeziehung zwischen den Authentifizierungsdaten und einem Zeitstempel eines Blocks aufweist, an dem sich die Authentifizierungsdaten befinden, und das Abrufen, durch den ersten Nutzungsknoten, des mindestens einen Teils von Authentifizierungsdaten des ersten Händlers aus den Blöcken Folgendes aufweist: Abrufen, aus den Blöcken, des mindestens einen Teils von Authentifizierungsdaten des ersten Händlers und eines Zeitstempels, der jedem des mindestens einen Teils von Authentifizierungsdaten entspricht; und Screenen des mindestens einen Teils von Authentifizierungsdaten basierend auf dem Zeitstempel, der jedem des mindestens einen Teils von Authentifizierungsdaten entspricht.

12. Rechenvorrichtung, umfassend einen Speicher und einen Prozessor, wobei der Speicher ausführbaren Code speichert und der Prozessor den ausführbaren Code ausführt, um das Verfahren nach einem der Ansprüche 1 bis 11 zu implementieren.

13. Computerlesbares Speichermedium, umfassend darauf gespeicherte Befehle, die, wenn sie von einem Prozessor einer Rechenvorrichtung ausgeführt werden, die Rechenvorrichtung veranlassen, das Verfahren nach einem der Ansprüche 1 bis 11 zu implementieren.

## Revendications

1. Procédé de stockage de données d'authentification de commerçant dans une chaîne de blocs d'un réseau de chaînes de blocs, le réseau de chaînes de blocs comprenant une pluralité de noeuds de vérification (11, 12) et une pluralité de noeuds d'utilisation, la pluralité de noeuds de vérification (11, 12) correspondant à diverses organisations configurées pour émettre divers types de données d'authentification, respectivement, pour un commerçant et les noeuds de la pluralité de noeuds d'utilisation étant des noeuds configurés pour utiliser des données d'authentification stockées dans le réseau de chaînes de blocs, le procédé comprenant :
l'obtention (202), par un premier noeud de vérification de la pluralité de noeuds de vérification (11, 12), de données d'authentification du commerçant, les données d'authentification étant émises pour le commerçant par une organisation correspondant au premier noeud de vérification ; et
la diffusion (204), par le premier noeud de vérification, des données d'authentification et d'une signature numérique du premier noeud de vérification à d'autres noeuds de vérification (11, 12) de la pluralité de noeuds de vérification (11, 12) dans le réseau de chaînes de blocs, de sorte que les données d'authentification soient vérifiées sur la base d'un mécanisme de consensus et stockées dans le réseau de chaînes de blocs en réponse au succès de la vérification des données d'authentification, dans lequel la vérification comprend la vérification de la signature numérique du premier noeud de vérification, dans lequel la vérification est effectuée en utilisant un contrat intelligent déployé dans le réseau de chaînes de blocs, dans lequel le contrat intelligent est conjointement signé par la pluralité de noeuds de vérification (11, 12), et dans lequel le contrat intelligent signé comprend une pluralité de clauses pour vérifier la signature numérique et les données d'authentification, dans lequel chacune de la pluralité de clauses correspond à une action de vérification spécifique.

2. Procédé selon la revendication 1, dans lequel les données d'authentification comprennent une ou plusieurs parmi des données d'image ou des données de texte.

3. Procédé selon la revendication 1, dans lequel les données d'authentification sont stockées dans le réseau de chaînes de blocs en association avec un identifiant de commerçant du commerçant en réponse au succès de la vérification des données d'authentification.

4. Procédé selon la revendication 1, dans lequel les données d'authentification sont stockées dans le réseau de chaînes de blocs en association avec un identifiant de noeud du premier noeud de vérification en réponse au succès de la vérification des données d'authentification.

5. Procédé selon la revendication 1, dans lequel la vérification comprend la vérification de données d'image par rapport à un ou plusieurs parmi : une taille des données d'image, une résolution des données d'image, une légalité de contenu des données d'image, une validité de contenu des données d'image, ou si les données d'image ont été modifiées.

6. Procédé selon la revendication 1, dans lequel la vérification comprend la vérification de données de texte par rapport à un ou plusieurs parmi : un format ou une validité de contenu des données de texte.

7. Procédé selon l'une quelconque des revendications précédentes, comprenant en outre :
l'obtention (302), par un premier noeud d'utilisation de la pluralité de noeuds d'utilisation, de tous les blocs dans le réseau de chaînes de blocs, les blocs stockant des données d'authentification respectives d'une pluralité de commerçants, la pluralité de commerçants comprenant un premier commerçant ; et
la récupération (304), par le premier noeud d'utilisation, d'au moins un élément de données d'authentification du premier commerçant à partir des blocs.

8. Procédé selon la revendication 7, dans lequel la récupération, par le premier noeud d'utilisation, de l'au moins un élément de données d'authentification du premier commerçant à partir des blocs comprend : l'établissement d'un index de la pluralité de commerçants pour les blocs, et la récupération de l'au moins un élément de données d'authentification du premier commerçant sur la base de l'index.

9. Procédé selon la revendication 7, dans lequel la récupération, par le premier noeud d'utilisation, de l'au moins un élément de données d'authentification du premier commerçant à partir des blocs comprend : l'établissement d'une base de données des données d'authentification pour les blocs, et la récupération de l'au moins un élément de données d'authentification du premier commerçant sur la base de la base de données, la base de données comprenant une relation d'association entre la pluralité de commerçants et les données d'authentification.

10. Procédé selon la revendication 9, dans lequel la base de données comprend en outre une relation d'association entre les données d'authentification et un identifiant de noeud d'un noeud de vérification (11, 12) correspondant à une organisation émettant les données d'authentification, et la récupération, par le premier noeud d'utilisation, de l'au moins un élément de données d'authentification du premier commerçant à partir des blocs comprend : la récupération, à partir des blocs, de l'au moins un élément de données d'authentification du premier commerçant et d'un identifiant de noeud d'un noeud de vérification (11, 12) correspondant à une organisation émettant chacun de l'au moins un élément de données d'authentification ; et la sélection de l'au moins un élément de données d'authentification sur la base de l'identifiant de noeud du noeud de vérification (11, 12) correspondant à l'organisation émettant chacun de l'au moins un élément de données d'authentification.

11. Procédé selon la revendication 9, dans lequel la base de données comprend en outre une relation d'association entre les données d'authentification et un horodatage d'un bloc au niveau duquel les données d'authentification sont situées, et la récupération, par le premier noeud d'utilisation, de l'au moins un élément de données d'authentification du premier commerçant à partir des blocs comprend : la récupération, à partir des blocs, de l'au moins un élément de données d'authentification du premier commerçant et d'un horodatage correspondant à chacun de l'au moins un élément de données d'authentification ; et la sélection de l'au moins un élément de données d'authentification sur la base de l'horodatage correspondant à chacun de l'au moins un élément de données d'authentification.

12. Dispositif informatique, comprenant une mémoire et un processeur, la mémoire stockant un code exécutable, et le processeur exécutant le code exécutable pour mettre en œuvre le procédé selon l'une quelconque des revendications 1 à 11.

13. Support de stockage lisible par ordinateur comprenant des instructions stockées sur celui-ci qui, lorsqu'elles sont exécutées par un processeur d'un dispositif informatique, amènent le dispositif informatique à mettre en œuvre le procédé selon l'une quelconque des revendications 1 à 11.
